# EUROPÄISCHE PATENTSCHRIFT

(11) **EP 1 799 518 B1**
(45) Veröffentlichungstag und Bekanntmachung des Hinweises auf die Patenterteilung: **04.02.2009**
(21) Anmeldenummer: 04789944.8
(22) Anmeldetag: 08.10.2004
(51) Int. Cl.: B60S 1/34

(54) **WISCHERARM, SOWIE VERFAHREN ZUR HERSTELLUNG EINES WISCHERARMS**
WIPER ARM AND METHOD FOR PRODUCING A WIPER ARM
BRAS D'ESSUIE-GLACE ET PROCEDES DE PRODUCTION D'UN BRAS D'ESSUIE-GLACE

(30) Priorität: 28.11.2003 DE 10355799
(43) Veröffentlichungstag der Anmeldung: 27.06.2007
(73) Patentinhaber: ROBERT BOSCH GMBH, 70442 Stuttgart (DE)
(72) Erfinder: WEILER, Michael, 363-9 Chungchongbuk-Do (KR); ZIMMER, Joachim, 77880 Sasbach (DE)
(86) Internationale Anmeldenummer: PCT/DE2004/002235
(87) Internationale Veröffentlichungsnummer: WO 2005/054018

(56) Entgegenhaltungen:
- WO-A-20/04002788
- WO-A-20/04065187
- FR-A- 2 212 803
- FR-A- 2 515 121
- FR-A- 2 781 742
- US-A- 3 480 985
- US-A- 4 318 201
- US-A1- 2003 167 587
- US-B1- 6 467 985

## Beschreibung

### Stand der Technik

Die Erfindung betrifft einen Wischeram nach Gattung des unabhängigen Anspruchs.

Es sind schon zahlreiche Wischerarme bekannt, die ein Befestigungsteil umfassen, das an einer Welle befestigbar ist, sowie ein Trageteil aufweisen, an dem ein Wischblatt befestigbar ist. Dabei ist ein Federteil vorgesehen, das als Balkenfeder ausgebildet ist, die das Befestigungsteil mit dem Trageteil federeleastisch verbindet.

Ein derartiger Wischerarm ist beispielsweise in der US 2,289,552 gezeigt. Hierbei ist das Befestigungsteil und das Trageteil durch einen Gelenkbolzen verbunden, wobei durch das als Blattfeder ausgebildete Federteil eine Vorspannung erzeugt wird, durch die das Trageteil und damit das Wischblatt auf die Scheibe gedrückt wird. Die dort gezeigte Lösung ist jedoch aufwendig, kompliziert und daher kostenintensiv.

Aus der nicht vorveröffentlichten DE 103 33 188 A1 ist ein Wischerarm bekannt, bei dem ein Trageteil mit einem Befestigungsteil über ein Federelement verbunden ist, welches zwischen zwei stabilen Konfigurationen überführbar ist.

Bei der dort gezeigten Ausführung ist jedoch die Verbindung zwischen Federteil und Befestigungsteil bzw. Trageteil aufwendig und kostenintensiv.

### Vorteile der Erfindung

Der erfindungsgemäße Wischerarm mit den Merkmalen des Hauptanspruchs hat den Vorteil, dass durch die Ausbildung des Befestigungsteils und des Trageteils aus Kunststoff und einer deformierten Befestigung zwischen Federteil und Befestigungsteil bzw. Trageteil, eine einfache und kostengünstige Ausbildung eines Wischerarms gezeigt ist. Diese weist darüber hinaus eine im Wesentlichen gleiche Stabilität sowie eine geringere Bauhöhe, als bekannte Scheibenwischerarme auf. Eine Kappe ist vorgesehen, die das Befestigungsteil aufnimmt. Auf diese Weise werden die Windgeräusche des Wischerarms reduziert. Darüber hinaus erhält dieser dadurch ein gefälliges Äußeres.

Das Federteil ist vom Trageteil und/oder Kappe im Wesentlichen vollständig aufgenommen, da auf diese Weise eine sehr windschlüpfrige und gefällige Ausführung der Erfindung realisiert werden

Durch die in den Unteransprüchen aufgeführten Maßnahmen ergeben sich vorteilhafte Weiterbildungen und Verbesserungen der im Hauptanspruch angegebenen Merkmale.

Besonders vorteilhaft ist es, wenn das Trageteil und/oder das Befestigungsteil mit dem Federteil durch ein deformierendes Schweißverfahren insbesondere Ultraschall- oder Reibschweißen verbunden ist. Dies ist kostengünstig und in der Serienfertigung einfach zu realisieren.

Weiterhin ist es vorteilhaft, das Trageteil zumindest teilweise um das Federteil herum in einem Spritzgussverfahren zu spritzen. Dies ist kostengünstig und erprobt, so dass sich ein sehr stabiler Wischerarm ergibt.

Das gleiche gilt, wenn das Befestigungsteil zumindest teilweise in das Federteil eingespritzt ist.

Weist das Trageteil an seinem, dem Befestigungsteil zugewandten Ende ein erstes Klipselement und die Kappe an ihrer, dem Trageteil zugewandten Seite ein zweites, mit dem ersten Klipselement zusammenwirkendes Klipselement auf, so ergibt sich eine einfache und kostengünstige Montage des erfindungsgemäßen Wischerarms.

Hierbei ist es von besonderem Vorteil, wenn das erste und zweite Klipselement scharnierartig zusammenwirken. Dadurch kann der Wischerarm aus seiner Betriebsposition in einfacher Weise ausgelenkt werden, ohne dass die Kappe hierbei bewegt wird.

Weiterhin ist es vorteilhaft, wenn das Trageteil und Kappe einstückig ausgebildet sind, da dies besonders kostengünstig ist.

Das Verfahren zur Herstellung eines Wischerarms hat den Vorteil, dass durch wenige einfache Schritte wie das Einlegen oder Auflegen des Trageteils und/oder des Befestigungsteils in eine Schweißvorrichtung, Einsetzen des Federteils, Zuführen der Schweißelektroden, sowie Verschweißen der Verbindung durch Ultraschall- oder Reibschweißen, eine einfache und kostengünstige Möglichkeit zur Herstellung eines erfindungsgemäßen Wischerarms gezeigt ist.

Hierbei ist es besonders vorteilhaft, wenn vor der Zuführung der Schweißelektroden noch mindestens ein Zusatzelement eingesetzt wird, da auf diese Weise die Verbindung zwischen Federteil und Befestigungsteil bzw. Trageteil verbessert wird.

### Zeichnungen

Verschiedene Ausführungsbeispiele der Erfindung sind in den Zeichnungen dargestellt und in der nachfolgenden Beschreibung näher erläutert. Es zeigen
Figur 1, einen erfindungsgemäßen Wischerarm in einer schematischen Längsschnittdarstellung,
Figur 2, das Federteil des erfindungsgemäßen Wischerarms im Detail,
Figur 3, ein erfindungsgemäßer Wischerarm in einer Variation,
Figur 4a-b, ein Detail aus einem erfindungsgemäßen Wischerarm gemäß Figur 3,
Figur 5, ein Detail aus einem erfindungsgemäßen Wischerarm in einer Variation,
Figuren 6a-b, ein Ausschnitt aus einem erfindungsgemäßen Wischerarm gemäße der Variation aus Figur 5,
Figuren 7a-d, die Verfahrensschritte des erfindungsgemäßen Verfahrens in schematischer Darstellung,
Figur 8, eine Verbindung zwischen Federteil und Trageteil aus Figur 7 im Detail,
Figur 9, einen Querschnitt durch die Verbindungsstelle aus Figur 8,
Figur 10a-b, die Verfahrensschritte des erfindungsgemäßen Reibschweißverfahrens,
Figur 11a-b, Querschnitte durch die Befestigungsstelle eines erfindungsgemäßen Wischerarms nach einem Reibschweißverfahren und
Figur 12 a-b, ein schematische Darstellungen eines erfindungsgemäßen Wischerarms aus einem Spritzgußverfahren.

### Beschreibung der Ausführungsbeispiele

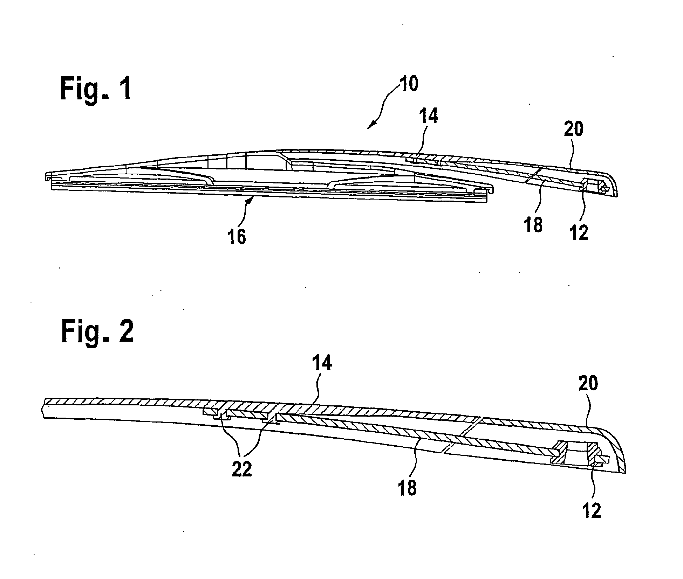

In Figur 1 ist ein erfindungsgemäßer Wischerarm 10 mit einem Wischblatt 16 in einer schematischen Längsschnittdarstellung gezeigt. Der Wischerarm 10 umfasst im Wesentlichen ein Befestigungsteil 12, sowie ein Trageteil 14, an dessen freien Ende das Wischblatt 16 angelenkt ist. Das Wischblatt 16 ist hier als sogenanntes "gelenkfreies Wischblatt" ausgebildet, das ohne Tragbügelgestell auskommt. Natürlich ist auch ein konventionelles Wischblatt 16 möglich, das typischerweise ein Tragbügelgestell aufweist. Befestigungsteil 12 und Trageteil 14 sind durch ein Federteil 18 verbunden, welches als Blatt- oder Balkenfeder ausgebildet ist. Zum Schutz vor Witterungseinflüssen und zur gefälligen Optik ist das Befestigungsteil 12, sowie ein Teil des Federteils 18 von einer Kappe 20 umhüllt.

In Figur 2 ist das Trageteil 14, das Befestigungsteil 12 und die Kappe 20 im Detail dargestellt. Das Befestigungsteil 12 ist als hohlzylinderartiges Spritzgußteil aus faserverstärktem Kunststoff ausgebildet und durch ein Ultraschallschweißverfahren mit dem Federteil 18 verbunden. Das Federteil 18 ist als Blattfeder ausgebildet, die zur Aufnahme des Befestigungsteil 12 ein Loch an einem Ende ihrer Längserstreckung aufweist, in welches das Befestigungsteil 12 eingesetzt und durch Ultraschall verschweißt ist.

Das andere Ende des Federelementes 18 ist ebenfalls über ein Ultraschallschweißverfahren mit dem Trageteil 14 verbunden. Hierzu weist das Federteil 18 am besagten Ende mehrere Öffnungen 23 auf, durch die entsprechende Schweißelemente 22 ragen. Die Schweißelemente 22 sind als zylinderförmige Stifte ausgebildet, die mit dem Trageteil 14 einstückig verbunden sind und sich von einer Basis 24 aus, in das Innere des im Querschnitt im wesentlichen U-förmligen Trageteils 14 ragen. Zur Verbindung des Federteils 18 mit dem Trageteil 12, sind die freien Enden der Schweißelemente 22 durch das Ultraschallschweißen derart deformiert, daß eine formschlüssige Verbindung zwischen dem Trageteil 14 und dem Federteil 18 entsteht. In einer Variation kann diese deformierte Verbindung auch durch Reibschweißen oder ein anderes deformierendes Verfahren hergestellt werden.

Das Trageteil 14 ist aus Kunststoff ausgebildet. Hier kommt vor allem verstärkter bzw. faserverstärkter Kunststoff in Betracht. Ebenso ist das Federteil 18 aus einem Kunststofffaser-Verbundwerksstoff oder aus Federstahl ausgebildet. Die Schweißelemente 22 sind bezüglich der Längserstreckung des Trageteils 14 in einem mittleren Bereich angeordnet, so dass das Trageteil 14 einen wesentlichen Teil des freien Bereichs des Federteil 18 aufnimmt. Die Kappe 20 ist daher bezüglich ihrer Längserstreckung im Verhältnis zum Trageteil 14, relativ kurz gehalten.

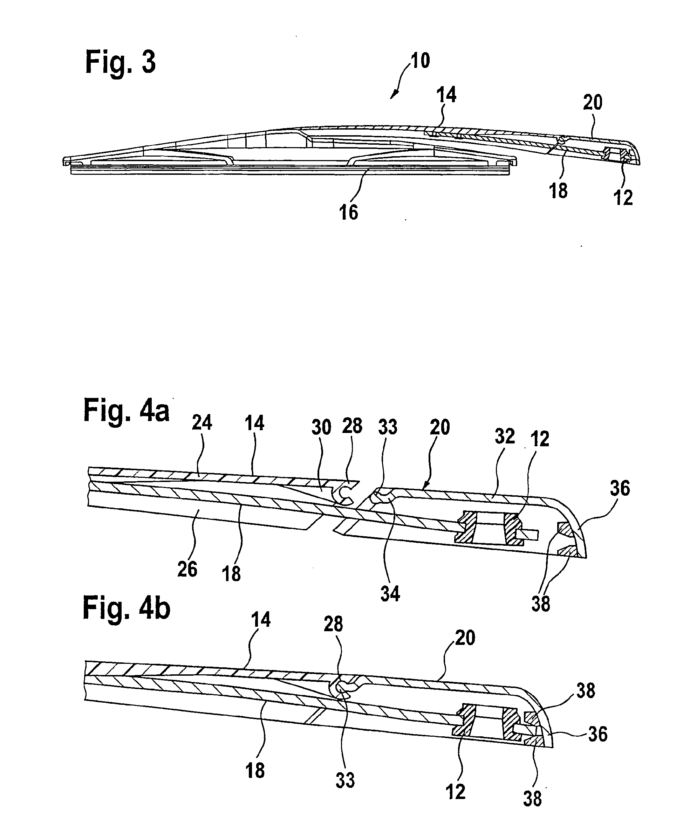

In Figur 3 ist eine Variation des erfindungsgemäßen Wischerarms 10 aus Figur 1 gezeigt. Die Kappe 20, sowie das Trageteil 14 sind hierbei gelenkartig miteinander verbunden.

Figur 4a und Figur 4b zeigt die gelenkartige Verbindung zwischen Trageteil 14 und Kappe 20 aus Figur 3 im Detail. Das Federteil 18 ist etwa in der Mitte der Längserstreckung des Trageteils 14 an diesem befestigt. Das Trageteil 14 ist im Querschnitt von in etwa umgekehrt u-förmiger Gestalt mit der Basis 24 und zwei Lateralschenkeln 26. An seinem, dem Befestigungsteil 12 zugewandten Ende, weist die Basis 24 des Trageteils ein erstes, klammerartiges Klipselement 28 auf, welches im hier gezeigten Längsschnitt des Wischerarms 10, von c-förmiger Gestalt ist und an seinem Rücken von einer Verstärkungsflanke 30 gestützt ist.

Die Kappe 20 ist im Querschnitt ebenfalls von im Wesentlichen u-förmiger Gestalt und weist an ihrer Basis 32 an ihrem, dem Trageteil 14 zugewandten Ende, ein zweites Klipselement 33 auf, das mit dem ersten Klipselement 28 zusammenwirkt. Im Wesentlichen besteht das zweite Klipselement 33 hierzu aus einem zylindrischen Abschnitt, der an das, dem Trageteil 14 zugewandten Ende der Basis 32 der Kappe 20 angefügt ist und in das klammerartige, hohlzylinderförmige erste Klipselement 28 eingeklipst werden kann. Damit sich zwischen Kappe 20 und Trageteil 14 auf der Außenfläche eine im Wesentlichen ebene Oberfläche gibt, ist das zweite Klipselement 32 an einer Biegung 34 der Basis 32 befestigt bzw. einstückig ausgeformt, die sich in Richtung des Inneren der Kappe 20 erstreckt. Die Kappe 20 kann auf diese Weise durch Schieben entlang seiner Längserstreckung in Richtung auf das Trageteil 14 mit demselben verklipst werden.

Die Kappe 20 ist, wie das Trageteil 14, im Querschnitt von im Wesentlichen u-förmiger Gestalt und weist daher eine Basis 32 und Lateralflanken 25 auf. An ihrem, dem Trageteil 14 abgewandten Ende, weist die Kappe 20 einen Abschluß 36 auf, der einstückig aus der Basis 32 der Kappe 20 ausgeformt ist. Hierzu ist die Basis nach unten, in Richtung der freien Enden der Lateralflanken 35 der Kappe 20 gezogen, so dass sich ein runder, wannenartiger Abschluß 36 ergibt. An diesem, wandartigen Abschluß 36 sind zwei Klammerelemente 38 ins Innere der Kappe 20 hineinerstreckt, die derart ausgebildet sind, dass sie das äußerste Ende des Federteils 18 auf der Seite des Befestigungsteils 12 umgreifen, wenn die Klipsverbindung 28, 33 eingerastet ist. Auf diese Weise ist die Kappe 20 auf der Seite des Trageteils 14 durch die Klipsverbindung 28, 33 und auf der anderen Seite durch die Klammerelemente 38 verbunden und gehaltert. Dies ist in Figur 4b verdeutlicht.

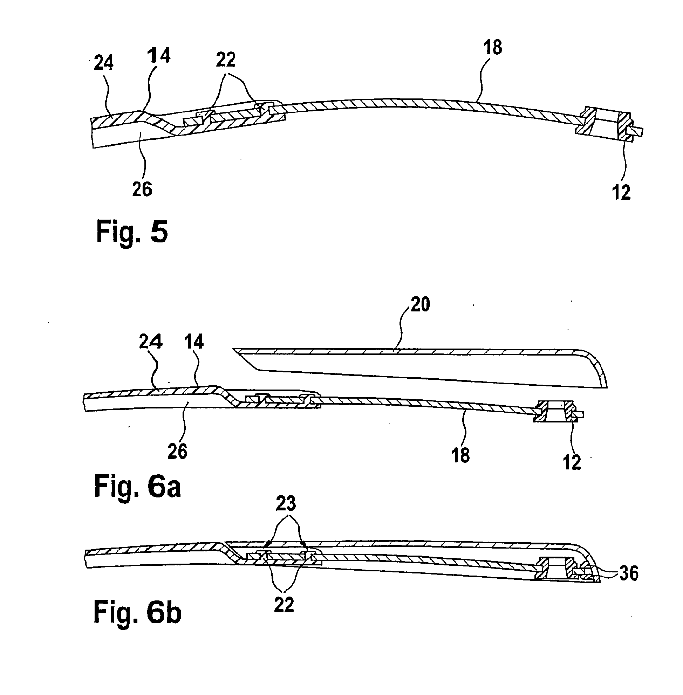

In Figur 5 ist eine Variation eines erfindungsgemäßen Wischerarms 10 zu den vorherigen Figuren gezeigt. Aus Gründen der Übersichtlichkeit wurde die Kappe 20 hier weggelassen. Identisch wie in den vorangegangenen Ausführungsbeispielen ist das Befestigungsteil 12 in ein Loch des Federteils 18 eingesetzt und Ultraschall- oder Reibverschweißt. Am anderen Ende des Federteils ist das Trageteil 14 jedoch in etwas anderer Weise befestigt.

Die Basis 24 des Trageteils 14 ist hier im Befestigungsbereich des Federteils 18 zwischen die beiden Lateralschenkel 26 abgesenkt, so dass die Schweißelemente 22 sich von der Basis 24 aus nach oben, d. h. zur scheibenabgewandten Seite hin, zwischen den beiden Lateralschenkeln 26 erstrecken. Dies hat den Vorteil, dass die Kraft die das Federteil 18 auf das Trageteil 14 ausübt, direkt auf die Basis 24 wirkt und die Schweißelemente 22 nicht auf Zug belastet werden.

Damit die Schweißelemente 22 von Außen nicht sichtbar sind, ist die Kappe 20 hier sehr lang ausgebildet, so dass sie das gesamte Federteil 18 überdeckt. Die Basis 32 der Kappe 20 setzt somit äußerlich die Basis 24 des Trageteils 14 fort, indem sie von dem Bereich der Basis 24 des Trageteils 14 abgesenkt ist, eben bis über das Befestigungsteil 12 hinaus verläuft und dasselbe überdeckend, wannenartig abgeschlossen ist.

Darüber hinaus sind die Lateralschenkel 26 im abgesenkten Bereich auch nach Innen versetzt, so dass die Außenseite der Kappe 20 mit der Außenseite des Trageteils 14 etwa bündig verläuft. Auch hier sind natürlich diverse Klammerelemente 38 wie in Figur 4 gezeigt möglich, die die Kappe 20 am Trageteil 14, am Federteil 18 oder am Befestigungsteil 12 haltern und befestigen (Figur 6b).

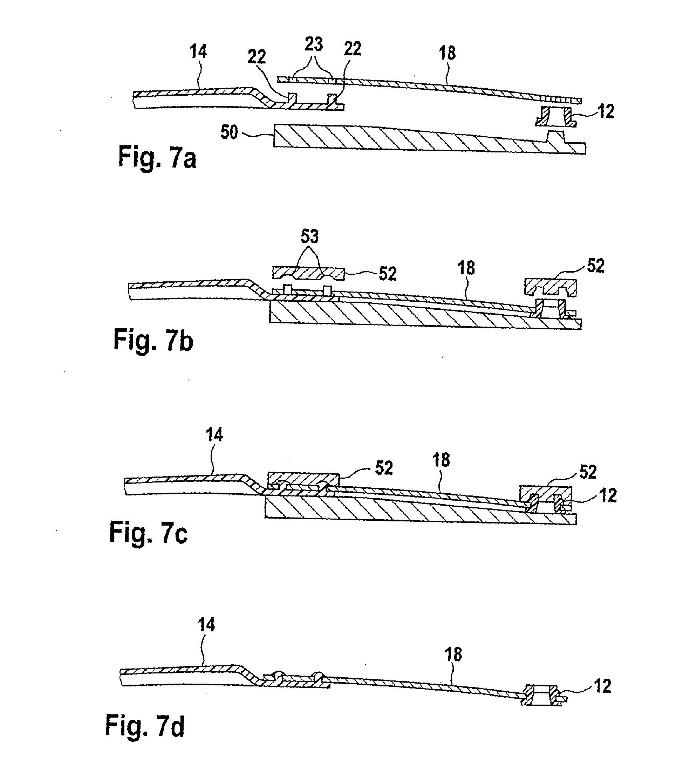

In den Figuren 7a-d ist das erfindungsgemäße Verfahren zur Herstellung eines erfindungsgemäßen Wischerarms 1 0 schematisch gezeigt.

Im ersten, in Figur 7a gezeigten Schritt, wird das Trageteil 14 mit den Schweißelementen 22, sowie das Befestigungsteil 12 in eine Schweißvorrichtung 50 eingesetzt. Das Federteil 18 wird daraufhin ebenfalls in die Schweißvorrichtung 50 eingesetzt, so dass die Schweißelemente 22 die Öffnungen 23 im Federteil 18 durchdringen. Ebenso durchdringt das hohlzylinderartige Befestigungsteil 12 eine vorgesehene Öffnung im Federteil 18. Damit ist das Federteil 18 bereits in seiner Endposition. Das Lochbild der Öffnungen 23 ist hierbei das gleiche Bild, welches die Schweißelemente 22 des Trageteils 14 zeigen.

Arretiert wird es anschließend, indem die Schweißelektroden 52 auf die Schweißelemente 22 bzw. das Befestigungsteil 12 aufgesetzt werden. Während des Ultraschallschweißens (Figur 7b) werden die Elektroden 52 auf die Schweißelemente 22 bzw. das Befestigungselement 12 gedrückt, worauf diese schmelzen. Dadurch wird, wie in Figur 7c gezeigt, eine formschlüssige Verbindung zwischen dem Trageteil 14 und dem Federteil 18 bzw. dem Befestigungsteil 12 und dem Federteil 18 hergestellt. Die Elektroden 52 weisen hierzu eine entsprechende, nietförmige Struktur 53 auf.

Anschließend kann das Trageteil 14, das Federteil 18 und das Befestigungsteil 12 zusammenmontiert aus der Schweißvorrichtung 50 entnommen werden und ist fertig (Figur 7d).

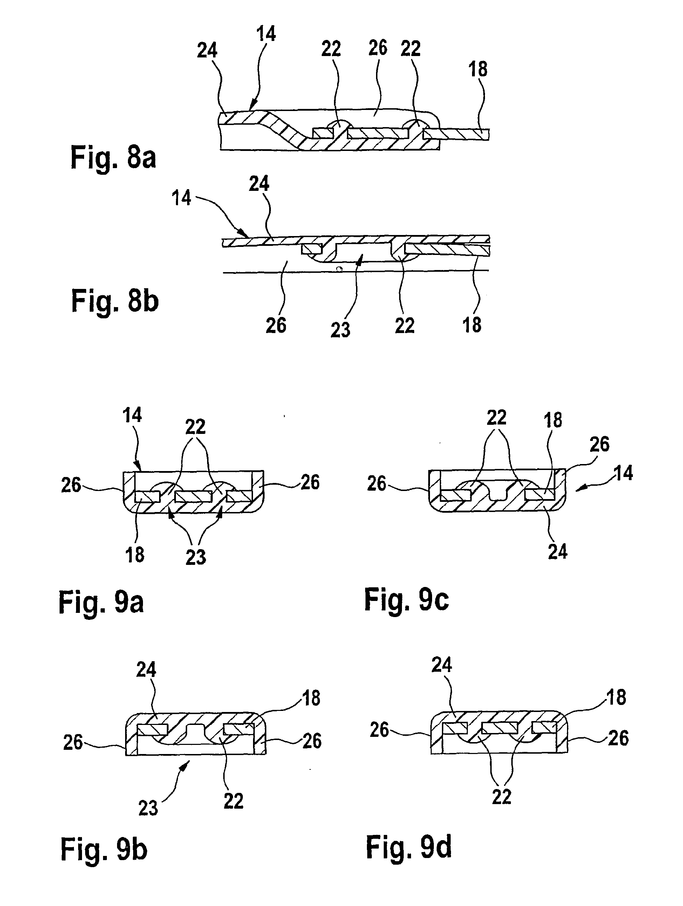

In Figur 8 sind die beiden Varianten aus Figur 2 und Figur 6 nochmals im Detail dargestellt. Figur 8a zeigt eine Befestigung des Federteils 18 am Trageteil 14, wie in Figur 5 gezeigt. Die Basis 24 des u-förmigen Trageteils 14 ist hierbei zwischen den Lateralflanken nach unten, auf die der Scheibe zugewandte Innenseite des Trageteils 14 gezogen und bildet dort einen Bereich aus, der im Wesentlichen parallel zur übrigen Basis 24 ist. Die beiden Lateralflanken 26 bleiben im wesentlichen bestehen. Das Federteil 18 ist zwischen den Lateralflanken 26 auf die Basis 24 aufgesetzt und wird durch die Lateralflanken 26 auch seitlich geführt. Auf diese Weise können Kräfte, die ansonsten als Scheerkräfte auf die Schweißelemente 22 wirken würden, durch die Lateralschenkel 26 aufgenommen werden. Die Schweißelemente 22 sind in die Öffnungen 23, des Federelements 18 eingeführt und durch ein Ultraschallschweißverfahren formschlüssig mit den Öffnungen 23 und damit dem Federelement 18 verbunden.

In Figur 8b ist ein Längsschnitt einer Ausbildung ähnlich wie in Figur 2, jedoch in einer Variation gezeigt. Das Federteil 18 weist hierbei eine relativ große Öffnung 23 auf. Von der Basis 24 des Trageteils 14 aus erstreckt sich nach Innen, zwischen die beiden Lateralflanken 26, ein hohlzylinderartiger Fortsatz als Schweißelement 22 der in die Öffnung 23 eingeführt ist und dort ultraschallverschweißt ist. Die Wände des hohlzylinderartigen Schweißelements 22 sind bezüglich der Symmetrieachse des hohlzylinderartigen Schweißelements 22 nach außen gebogen.

In den Figuren 9a-d sind diese Varianten nochmals in einer Querschnittsdarstellung gezeigt.

In Figur 9a sind identisch wie in Figur 5 mehrere, insbesondere vier zylinderartige Fortsätze 22 gezeigt, die in Öffnungen 23 des Federteils 18 hineinragen und dort ultraschallverschweißt sind. Das Federteil 18 ist hierbei so breit, dass es zwischen den beiden Lateralschenkeln 26 des Tragteils 14 bündig anschließt, um Querkräfte aufzunehmen.

In Figur 9b ist eine größere Öffnung 23 im Federteil 18 angeordnet, durch die in hohlzylinderförmiger Fortsatz als Schweißelement 22 von der Basis 24 aus ins Innere zwischen die beiden Lateralschenkel 26 hineinerstreckt. Dieser hohlzylinderartige Fortsatz 22 ist ultraschallverschweißt, so dass ein Formschluß zwischen dem Trageteil 14 und dem Federteil 18 entsteht.

In Figur 9c ist eine weitere Variation gezeigt, die eine Kombination der in Figur 8a und 8b gezeigten Möglichkeiten aufzeigt. Hierbei ist die Basis 24 des Trägerteils 14, wie in Figur 8a, abgesenkt. Zwischen den beiden Lateralflanken 26 erstreckt sich ins Innere hinein ein hohlzylinderartiger Fortsatz als Schweißelement 22, der durch Ultraschallschweißung mit dem Federteil 18 eine formschlüssige Verbindung wie in Figur 8b gezeigt, bildet.

In Figur 9d ist ein Querschnitt durch eine Verbindung gemäß Figur 2 gezeigt. Die Schweißelemente 22 ragen von der Basis 24 aus, ins Innere des Trageelementes 14, und damit zwischen die beiden Lateralschenkel 26 hinein. Die Öffnungen 23 des Federteils 18 werden von den Schweißelementen 22 durchdrungen, die durch Ultraschallverschweißung eine formschlüssige Verbindung mit dem Federteil 18 bilden.

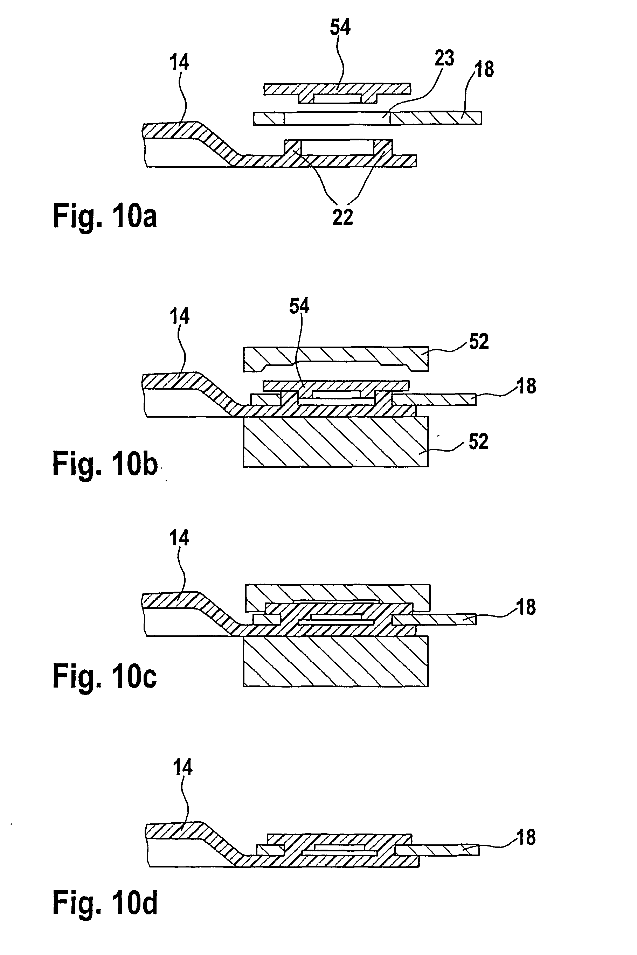

In Figur 10 sind die einzelnen Verfahrensschritte eines erfindungsgemäßen Reibschweißverfahrens dargestellt.

In einem ersten Schritt wird das Federteil 18 mit seiner Öffnung 23 auf die Schweißelemente 22 des Trageteils 14 aufgesteckt. Im zweiten Schritt wird ein Zusatzelemente 54 aufgesetzt, welches derart geformt ist, dass es mit den Schweißelementen 22 in Kontakt steht. Anschließend werden die Schweißelektroden 52 aufgesetzt und der dem Fachmann bekannte Reibschweißvorgang durchgeführt. Hierbei wird der Kunststoff des Zusatzelementes 54, sowie der Kunststoff der Schweißelemente 22 aufgeschmolzen und verbinden sich, so dass eine stoffschlüssige Verbindung zwischen dem Zusatzelement 54 und dem Trageteil 14 entsteht. In dieser stoffschlüssigen Verbindung ist formschlüssig das Federteil 18 eingeschlossen. Anschließend werden die Schweißelektroden 52 entfernt und das Federteil 18 ist formschlüssig mit dem Trageteil 14 verbunden.

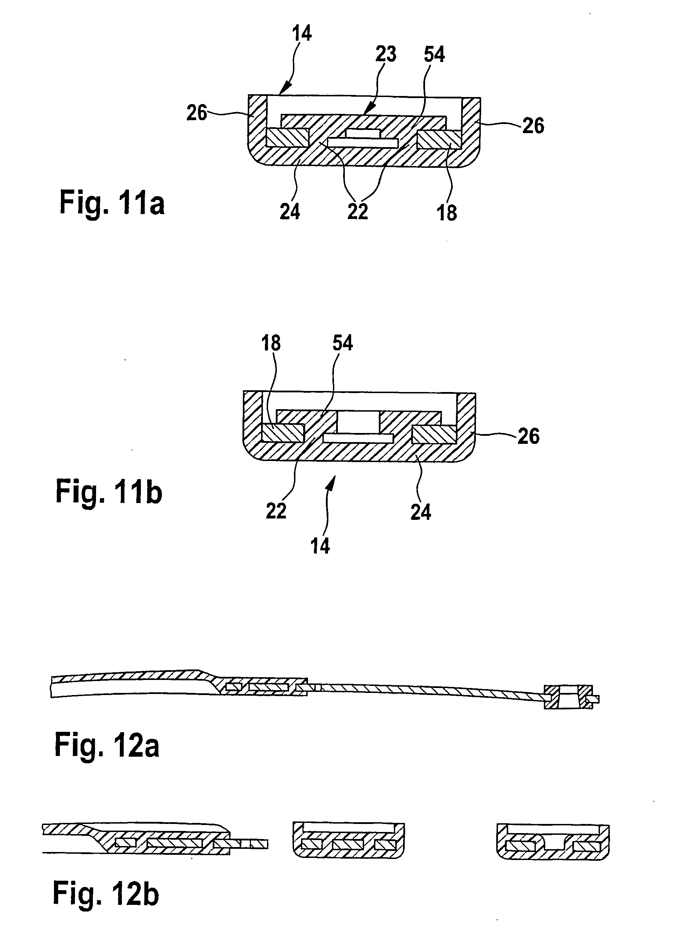

In Figur 11 ist die Verbindung aus Figur 10 nochmals in einer Querschnittsdarstellung gezeigt. Das Trageteil 14 ist von im Wesentlichen u-förmiger Gestalt. Zwischen den beiden Lateralschenkeln 26 ist die Basis 24 angeordnet, von der aus sich nach Innen die beiden Schweißelemente 22 hineinerstrecken. Die Öffnung 23 des Federelementes 18 ist die durch die Schweißelemente 22 durchdrungen. Auf der Innenseite ist das Zusatzelement 54 mit den Schweißelementen 22 durch Reibschweißung verbunden, so dass das Federteil 18 formschlüssig mit dem Trageteil 14 verbunden ist.

In Figur 11b ist eine Variante aus Figur 11a gezeigt, das Zusatzelement 54 ist hierbei als Ring ausgebildet und dem mit den Schweißelementen 22 ebenfalls durch Reibschweißen verschweißt.

In Figur 12 a-b ist eine weitere Variation der Erfindung gezeigt. Hier ist das Trageteil 14 um das Federteil 18 herum in einem Spritzgussverfahren gespritzt. Ebenso kann natürlich das Befestigungsteil 12 in das Federteil 18 eingespritzt werden. Typischerweise besteht das Befestigungsteil in diesem Fall aus Kunststoff der verstärkt oder faserverstärkt ausgebildet ist. Dieser Spritzvorgang von Trageteil 14 und Befestigungsteil 12 kann in einem Schritt durchgeführt werden. Das Spritzgießen ist hierbei als die stärkste Form der Deformation anzusehen, sodaß auch hier eine deformierte Befestigung vorliegt. Figur 12 a zeigt einen entsprechenden Längsschnitt und Figur 12b verschiedene Querschnitte durch einen erfindungsgemäßen Wischerarm 10

## Patentansprüche

1. Wischerarm (10), insbesondere für ein Kraftfahrzeug, mindestens umfassend
- ein Befestigungsteil (12), das an einer Welle befestigbar ist,
- ein Trageteil (14), an dem ein Wischblatt (16) befestigbar ist,
- ein Federteil (18), das als Balkenfeder ausgebildet ist, die das Befestigungsteil (12) mit dem Trageteil (14) verbindet,
**dadurch gekennzeichnet, dass**
das Befestigungsteil (12) und das Trageteil (14) aus Kunststoff ausgebildet sind und das Befestigungsteil (12) und/oder das Trageteil (14) deformiert mit dem Federteil (18) verbunden sind, wobei eine Kappe (20) vorgesehen ist, die das Befestigungsteil (12) aufnimmt und das Federteil (18) von Trageteil (14) und/oder Kappe (20) im Wesentlichen vollständig aufgenommen ist.

2. Wischerarm (10) nach Anspruch 1, **dadurch gekennzeichnet, dass** das Trageteil (14) und/oder das Befestigungsteil (12) mit dem Federteil (18) durch ein deformierendes Schweißverfahren, insbesondere Ultraschall- oder Reibschweißen verbunden ist.

3. Wischerarm (10) nach Anspruch 1, **dadurch gekennzeichnet, dass** das Trageteil (14) zumindest teilweise um das Federteil (18) herum gespritzt ist.

4. Wischerarm (10) nach Anspruch 1, **dadurch gekennzeichnet, dass** das Befestigungsteil (12) zumindest teilweise in das Federteil (18) eingespritzt ist.

5. Wischerarm (10) nach Anspruch 1, **dadurch gekennzeichnet, dass** das Trageteil (14) an seinem, dem Befestigungsteil (12) zugewandten Ende ein erstes Clips-Element (28) und die Kappe (20) an ihrer, dem Trageteil (14) zugewandten Seite ein zweites, mit dem ersten Clips-Element (28) zusammenwirkendes zweites Clips-Element (33) aufweist.

6. Wischerarm (10) nach Anspruch 5, **dadurch gekennzeichnet, dass** das erste und zweite Clips-Element (28, 33) scharnierartig zusammenwirken.

7. Wischerarm nach Anspruch 1, **dadurch gekennzeichnet, dass** Trageteil (14) und Kappe (20) einstückig ausgebildet sind.

## Claims

1. Wiper arm (10), in particular for a motor vehicle, at least comprising
- a fastening part (12) which can be fastened to a shaft,
- a support part (14) to which a wiper blade (16) can be fastened,
- a spring part (18) which is designed as a beam spring and which connects the fastening part (12) to the support part (14),
**characterized in that**
the fastening part (12) and the support part (14) are formed from plastic and the fastening part (12) and/or the support part (14) are/is connected in a deformed fashion to the spring part (18), with a cap (20) being provided which holds the fastening part (12), and with the spring part (18) being substantially completely held by the support part (14) and/or cap (20).

2. Wiper arm (10) according to Claim 1, **characterized in that** the support part (14) and/or the fastening part (12) are/is connected to the spring part (18) by means of a deforming welding process, in particular ultrasonic or friction welding.

3. Wiper arm (10) according to Claim 1, **characterized in that** the support part (14) is at least partially injection-moulded around the spring part (18).

4. Wiper arm (10) according to Claim 1, **characterized in that** the fastening part (12) is at least partially injection-moulded into the spring part (18).

5. Wiper arm (10) according to Claim 1, **characterized in that** the support part (14) has, at its end which faces towards the fastening part (12), a first clip element (28), and the cap (20) has, at its side which faces toward the support part (14), a second clip element (33) which interacts with the first clip element (28).

6. Wiper arm (10) according to Claim 5, **characterized in that** the first and the second clip elements (28, 33) interact in the manner of a hinge.

7. Wiper arm (10) according to Claim 1, **characterized in that** the support part (14) and the cap (20) are formed in one piece.

## Revendications

1. Bras d'essuie-glace (10), en particulier pour un véhicule automobile, comprenant au moins :
- une partie de fixation (12), qui peut être fixée à un arbre,
- une partie de support (14) sur laquelle peut être fixé un bras d'essuie-glace (16),
- une partie de ressort (18), qui est réalisée sous forme de ressort à barre, qui relie la partie de fixation (12) à la partie de support (14),
**caractérisé en ce que**
la partie de fixation (12) et la partie de support (14) sont réalisées en plastique et la partie de fixation (12) et/ou la partie de support (14) sont connectées de manière déformée à la partie de ressort (18), un capuchon (20) étant prévu, lequel reçoit la partie de fixation (12), et la partie de ressort (18) étant reçue sensiblement complètement par la partie de support (14) et/ou le capuchon (20).

2. Bras d'essuie-glace (10) selon la revendication 1, **caractérisé en ce que** la partie de support (14) et/ou la partie de fixation (12) sont connectées à la partie de ressort (18) par un procédé de soudage déformant, notamment un soudage aux ultrasons ou par friction.

3. Bras d'essuie-glace (10) selon la revendication 1, **caractérisé en ce que** la partie de support (14) est injectée au moins en partie autour de la partie de ressort (18).

4. Bras d'essuie-glace (10) selon la revendication 1, **caractérisé en ce que** la partie de fixation (12) est injectée au moins en partie dans la partie de ressort (18).

5. Bras d'essuie-glace (10) selon la revendication 1, **caractérisé en ce que** la partie de support (14) présente, à son extrémité tournée vers la partie de fixation (12), un premier élément d'enclipsage (28) et le capuchon (20) présente, sur son côté tourné vers la partie de support (14), un deuxième élément d'enclipsage (33) coopérant avec le premier élément d'enclipsage (28).

6. Bras d'essuie-glace (10) selon la revendication 5, **caractérisé en ce que** le premier et le deuxième élément d'enclipsage (28, 33) coopèrent à la manière d'une charnière.

7. Bras d'essuie-glace selon la revendication 1, **caractérisé en ce que** la partie de support (14) et le capuchon (20) sont réalisés d'une seule pièce.
